# EUROPÄISCHE PATENTSCHRIFT

(11) **EP 3 861 280 B1**
(45) Veröffentlichungstag und Bekanntmachung des Hinweises auf die Patenterteilung: **13.04.2022**
(21) Anmeldenummer: 19782495.6
(22) Anmeldetag: 24.09.2019
(51) Int. Cl.: G01B 11/06

(54) **VERFAHREN ZUM UNTERDRÜCKEN VON ABBILDUNGEN VON REFLEXIONEN IN ZUMINDEST EINEM KAMERABILD EINER KAMERA EINER UMFELDSENSORVORRICHTUNG EINES KRAFTFAHRZEUGS SOWIE ENTSPRECHENDE UMFELDSENSORVORRICHTUNG**
METHOD FOR SUPPRESSING IMAGES OF REFLECTIONS IN AT LEAST ONE CAMERA PICTURE OF A CAMERA OF AN ENVIRONMENT SENSOR DEVICE OF A MOTOR VEHICLE, AND CORRESPONDING ENVIRONMENT SENSOR DEVICE
PROCÉDÉ POUR SUPPRIMER DES REPRÉSENTATIONS DE RÉFLEXIONS DANS AU MOINS UNE IMAGE D'UNE CAMÉRA D'UN DISPOSITIF DE DÉTECTION D'ENVIRONNEMENT D'UN VÉHICULE À MOTEUR AINSI QUE DISPOSITIF DE DÉTECTION D'ENVIRONNEMENT CORRESPONDANT

(30) Priorität: 04.10.2018 DE 102018216983
(43) Veröffentlichungstag der Anmeldung: 11.08.2021
(73) Patentinhaber: Audi AG, 85045 Ingolstadt (DE)
(72) Erfinder: RAAIJMAKERS, Marvin, 85049 Ingolstadt (DE); KRÄMER, Stefan, 64625 Bensheim (DE)
(86) Internationale Anmeldenummer: PCT/EP2019/075693
(87) Internationale Veröffentlichungsnummer: WO 2020/069919

(56) Entgegenhaltungen:
- WO-A1-2018/092540
- US-A1- 2017 243 079
- US-A1- 2018 268 246

## Beschreibung

Die Erfindung betrifft eine Umfeldsensorvorrichtung für ein Kraftfahrzeug. Die Umfeldsensorvorrichtung erfasst zumindest ein Umgebungsobjekt in einem Umfeld des Kraftfahrzeugs mittels einer Kamera. Um hierbei Reflexionen, die an einer Oberfläche eines Umgebungsobjekts vorhanden sein können, in den Kamerabildern der Kamera nicht mit abzubilden, ist eine Polarisationsfiltereinrichtung vorgesehen. Zu der Erfindung gehören auch ein Kraftfahrzeug mit der Umfeldsensorvorrichtung sowie ein Verfahren zum Unterdrücken von Abbildungen der besagten Reflexionen in Kamerabildern.

Die Verwendung einer Polarisationsfiltereinrichtung ist beispielsweise aus der DE 10 2014 017 229 A1 bekannt. Mittels der Polarisationsfiltereinrichtung werden hier in Kamerabildern einer Kamera solche Reflexionen nicht mit abgebildet, die in einer Windschutzscheibe des Kraftfahrzeugs sichtbar sind, durch welche hindurch die Kamera ein Umfeld des Kraftfahrzeugs filmt. Die Anordnung der Polarisationsfiltereinrichtung ist nur statisch, was hier ausreicht, da die Reflexion immer dieselben sind, nämlich eine Spiegelung der Armatur in der Windschutzscheibe.

Aus der DE 10 2012 222 303 A1 ist bekannt, dynamische oder veränderliche Reflexionen in Kamerabildern zu unterdrücken, indem ein Differenzbild aus zwei Kamerabildern berechnet wird, von denen eines mit einem Polarisationsfilter und eines ohne Polarisationsfilter aufgenommen wurde. Dieses Verfahren ist aber sehr rechenintensiv.

Aus der DE 10 2011 088 130 A1 ist ein Kraftfahrzeug bekannt, bei welchem eine Umfeldsensorvorrichtung einen Rotanteil in Kamerabildern ermittelt und daraufhin entscheidet, ob vor dem Kraftfahrzeug eine Bremssituation herrscht. Reflexionen von Bremslicht an anderen Objekten werden hierbei genutzt, sodass sie nicht herausgefiltert werden dürfen.

In einem Kraftfahrzeug kann eine Prozessoreinrichtung auf der Grundlage von Kamerabildern einer Kamera zumindest ein Umgebungsobjekt in dem Umfeld des Kraftfahrzeugs erkennen. Dies kann beispielsweise genutzt werden, um eine autonome Fahrfunktion und/oder eine Fahrassistenzfunktion in dem Kraftfahrzeug bereitzustellen. Beispielsweise kann als Umgebungsobjekt ein anderes Kraftfahrzeug erkannt und überprüft werden, ob ein Kollisionskurs vorliegt. Beim Erkennen des zumindest einen Umgebungsobjekts auf der Grundlage von zumindest einem Kamerabild einer Kamera kann es allerdings zu einer Fehlerkennung kommen, die darin bestehen kann, dass ein vermeintliches Umgebungsobjekt erkannt wird, obwohl es sich lediglich um eine Reflexion in einer reflektierenden Oberfläche eines anderes Umgebungsobjekts handelt. Ein solches Beispiel kann sich ergeben, wenn ein Fahrradfahrer neben einem Bus fährt und in der lackierten und damit reflektierenden Oberfläche einer Seitenwand des Busses eine Reflexion des Radfahrers zu erkennen ist. Beim Auswerten eines Kamerabilds einer Kamera kann eine Prozessoreinrichtung dann zwei Fahrradfahrer erkennen, obwohl lediglich ein Fahrradfahrer und dessen Spiegelbild in dem zumindest einen Kamerabild abgebildet sind. Eine andere Form von unerwünschter Reflexion stellen Spitzlichter oder Glanzlichter dar, die verhindern, dass eine glatte, homogene Fläche als solche erkannt werden kann.

Durch eine Reflexion von Licht an einer reflektierenden Oberfläche eines Umgebungsobjekts ergibt sich in der Regel polarisiertes Licht. Durch die Verwendung einer Polarisationsfiltereinrichtung kann somit beim Erfassen eines Kamerabilds dasjenige Licht, welches zu einer Reflexion gehört oder von einer Reflexion stammt, mittels einer Polarisationsfiltereinrichtung unterdrückt oder gedämpft oder reduziert werden. In dem Kamerabild ergibt sich somit keine oder zumindest eine gedämpfte Abbildung der Reflexion.

Allerdings ist die Ausrichtung der Polarisation von reflektiertem Licht abhängig von der räumlichen Orientierung der reflektierenden Oberfläche, in welcher die Reflexion zu sehen ist. Entsprechend muss auch die Polarisationsrichtung einer Polarisationsfiltereinrichtung angepasst oder nachgeführt werden. Eine statische Ausrichtung einer Polarisationsfiltereinrichtung reicht für dynamische Vorgänge, wie beispielsweise die Überwachung zumindest eines Umgebungsobjekts im Umfeld eines Kraftfahrzeugs, nicht aus.

Das Dokument WO 2018/092540 A1 beschreibt eine Methode zum Entfernen von Reflexionen in einem Kamerabild, die entstehen können, wenn ein Objekt durch eine Glasscheibe hindurch fotografiert wurde.

Das Dokument US 2017/243079 A1 beschreibt eine Methode zum Entfernen von Streulichteinflüssen in einem Kamerabild, die entstehen können, wenn ein Objekt durch trübe Luft hindurch fotografiert wurde.

Das Dokument US 2018/268246 A1 beschreibt eine Methode, um Reflexionen in einer Umgebung eines Objekts auszunutzen, um Informationen über das Objekt selbst zu erhalten.

Der Erfindung liegt die Aufgabe zugrunde, bei einer Umfeldsensorvorrichtung mit Kamera dafür zu sorgen, dass Reflexionen, die sich an einer reflektierenden Oberfläche zumindest eines Umgebungsobjekts ergeben können, in einem Kamerabild nur reduziert oder abgeschwächt oder gedämpft abgebildet sind.

Die Aufgabe wird durch die Gegenstände der unabhängigen Patentansprüche gelöst. Vorteilhafte Ausführungsformen der Erfindung ergeben sich durch die abhängigen Patentansprüche, die folgende Beschreibung sowie die Figuren.

Durch die Erfindung ist eine Umfeldsensorvorrichtung oder Umgebungssensorvorrichtung für ein Kraftfahrzeug bereitgestellt. Die Umfeldsensorvorrichtung weist eine Kamera, eine Polarisationsfiltereinrichtung und eine Prozessoreinrichtung auf. Die Kamera ist dazu eingerichtet, zumindest ein Kamerabild, in welchem ein Umfeld oder eine Umgebung des Kraftfahrzeugs abgebildet ist, zu erzeugen. Die Polarisationsfiltereinrichtung ist dazu eingerichtet, bei Erfassen des zumindest einen Kamerabilds, also während des Erfassens des zumindest einen Kamerabilds, ein aus dem Umfeld in der Kamera eintreffendes Licht in Bezug auf eine vorbestimmte Polarisationsrichtung zu dämpfen oder zu filtern. Mit anderen Worten gibt es in Bezug auf die Polarisation des Lichtes eine Vorzugsrichtung, welche von der Polarisationsfiltereinrichtung durchgelassen wird, und eine Polarisationsrichtung, die angibt, welches Licht mit welcher Polarisation gedämpft wird. Die Prozessoreinrichtung ist dazu eingerichtet, in dem zumindest einen Kamerabild zumindest ein Umgebungsobjekt zu erkennen. Als jeweiliges Umgebungsobjekt kann beispielsweise ein anderer Verkehrsteilnehmer, beispielsweise ein Kraftfahrzeug und/oder ein Radfahrer und/oder ein Fußgänger, erkannt werden. Als jeweiliges Umgebungsobjekt kann aber auch ein stationäres Objekt, beispielsweise eine Infrastrukturkomponente (zum Beispiel eine Ampel und/oder eine Straßenlaterne) und/oder ein Baum und/oder ein parkendes Kraftfahrzeug und/oder ein Haus mit einer reflektierenden Fensterscheibe erkannt werden. Mit "erkennen" ist hierbei gemeint, dass zumindest die Form des Umgebungsobjekts und/oder eine Objektklasse (Benennung als Kraftfahrzeug, Fußgänger, Radfahrer, Ampel...) erkannt wird. Dies kann beispielsweise auf der Grundlage eines neuronalen Netzwerkes erfolgen. Eine Prozessoreinrichtung zum Erkennen von zumindest einem Umgebungsobjekt in zumindest einem Kamerabild kann an sich aus dem Stand der Technik entnommen werden.

Um nun zu vermeiden, dass die Prozesseinrichtung auch ein Spiegelbild, also eine Reflexion eines Umgebungsobjekts an einer Oberfläche eines anderen Umgebungsobjekts, oder ein besonders grelles Spitzlicht ebenfalls fälschlicherweise für ein weiteres Umgebungsobjekt hält, ist erfindungsgemäß vorgesehen, dass die Polarisationsfiltereinrichtung dazu eingerichtet ist, ihre Polarisationsrichtung in Abhängigkeit von einem Steuersignal einzustellen. Mit anderen Worten kann durch ein elektrisches und/oder digitales Steuersignal gesteuert oder eingestellt werden, welches Licht mit welcher Polarisation von der Polarisationsfiltereinrichtung entweder durchgelassen oder gedämpft wird.

Um die benötigte Ausrichtung der Polarisationsrichtung zu ermitteln, ist eine Schätzeinrichtung der Umfeldsensorvorrichtung dazu eingerichtet, eine jeweilige Ausrichtung einer jeweiligen Oberflächenormale zumindest einer Oberfläche des zumindest einen Umgebungsobjekts zu schätzen. Die Schätzeinrichtung kann also beispielsweise auf einem Erkennungsergebnis der Prozessoreinrichtung aufsetzen oder dieses nutzen, da die Prozessoreinrichtung durch ihren Erkennungsprozess das zumindest eine Umgebungsobjekt beschreibt. Die Schätzeinrichtung kann daraufhin für zumindest eine Oberfläche des zumindest einen Objekts die Ausrichtung der Oberfläche, das heißt deren Oberflächennormale, schätzen.

Des Weiteren ist eine Stelleinrichtung dazu eingerichtet, in Abhängigkeit von der jeweiligen geschätzten Ausrichtung der zumindest einen Oberfläche jeweils eine Sollpolarisationsrichtung für die Polarisationsfiltereinrichtung zu ermitteln. Mit anderen Worten wird durch die Stelleinrichtung festgelegt, wie die Polarisationsrichtung der Polarisationsfiltereinrichtung ausgerichtet sein muss, damit eine jeweilige Reflexion, die an der zumindest einen Oberfläche sichtbar sein könnte, nicht in dem zumindest einen Kamerabild abgebildet wird. Dazu wird die Sollpolarisationsrichtung derart festgelegt, dass ein an der jeweiligen Oberfläche reflektiertes Licht durch die Polarisationsfiltereinrichtung gedämpft oder unterdrückt oder reduziert wird. Dies ist dadurch möglich, dass die Polarisation von Licht, das an einer Oberfläche reflektiert wird, von der Ausrichtung der Oberfläche, das heißt der Orientierung der Flächennormalen, abhängig ist. Die Oberflächennormale ist ein senkrecht auf der Oberfläche angeordneter oder stehender (gedachter) Richtungsvektor. Der Zusammenhang zwischen Ausrichtung einer Oberflächenormalen und der sich daraus ergebenden Polarisation von reflektiertem Licht ist an sich aus dem Stand der Technik bekannt. Die Sollpolarisationseinrichtung gibt also diejenige Einstellung der Polarisationsrichtung der Polarisationsfiltereinrichtung an, durch welche in dem zumindest einen Kamerabild eine jeweilige Abbildung von Reflexionen, also an der zumindest einen Oberfläche reflektierten Lichts, reduziert oder gedämpft oder unterdrückt ist.

Die Stelleinrichtung erzeugt dann das besagte Steuersignal, durch welches die Polarisationsfiltereinrichtung gesteuert wird, damit sie ihre Polarisationsrichtung gemäß der jeweils ermittelten Sollpolarisationsrichtung einstellt. Mit anderen Worten wird die Polarisationsrichtung in Abhängigkeit von dem zumindest einen Kamerabild adaptiert oder ausgerichtet oder angepasst. Durch die Erfindung ergibt sich der Vorteil, dass eine Polarisationsfiltereinrichtung dynamisch oder adaptiv betrieben wird, indem ihre Polarisationsrichtung an die aktuelle Umgebungssituation im Umfeld des Kraftfahrzeugs angepasst wird, sodass eine jeweilige reflektierende Oberfläche zumindest eines Umgebungsobjekts beim Ausrichten der Polarisationsrichtung der Polarisationsfiltereinrichtung berücksichtigt wird. Es ist also nicht notwendig, sich auf einen statisch ausgerichteten Polarisationsfilter zu verlassen.

Die Erfindung umfasst auch Ausführungsformen, durch die sich zusätzliche Vorteile ergeben.

Mehrere Ausführungsformen betreffen die Frage, wie in der Polarisationsfiltereinrichtung deren Polarisationsrichtung adaptiv ausgestaltet werden kann.

In einer Ausführungsform umfasst die Polarisationsfiltereinrichtung eine drehbar gelagerte Polarisationsfilterscheibe, welche die Polarisationsrichtung aufweist. Eine solche Polarisationsfilterscheibe kann beispielsweise eine Glasscheibe oder eine Kunststoffscheibe sein, auf welche eine Metallschicht aufgedampft oder aufgetragen ist, mittels welcher ein Drahtgitterpolarisator realisiert ist. Die Polarisationsfilterscheibe kann auch auf der Grundlage eines Kristalls mit Polarisationswirkung gebildet sein. Die Polarisationsfiltereinrichtung kann des Weiteren eine Aktuatoreinheit zum Drehen der Polarisationsfilterscheibe umfassen. Diese Aktuatoreinheit ist dazu eingerichtet, eine Drehlage oder räumliche Ausrichtung der Polarisationsfilterscheibe in Abhängigkeit von dem besagten Steuersignal einzustellen. Mit anderen Worten kann die Polarisationsfilterscheibe gedreht werden und hierdurch eine Ausrichtung von deren Polarisationsrichtung eingestellt werden. Die Polarisationsfilterscheibe kann vor oder in einer Optik der Kamera angeordnet sein. Sie ist also in einem optischen Pfad der Kamera vor deren Sensorchip angeordnet. Die Ausführungsform weist den Vorteil auf, dass eine herkömmliche Polarisationsfilterscheibe zum Realisieren der Polarisationsfiltereinrichtung genutzt werden kann.

In einer Ausführungsform umfasst die Polarisationsfiltereinrichtung, dass ein Sensorchip der Kamera zum Erfassen von Bildpunkten des zumindest einen Kamerabilds jeweils auch mehrere Subpixelsensoren (also mehrere pro Bildpunkt) aufweist. Diese Subpixelsensoren weisen unterschiedliche Polarisationsrichtungen auf. Mit anderen Worten wird jeder Bildpunkt in dem Sensorchip nicht nur durch einen einzigen Pixelsensor gebildet, der jeweils beispielsweise für die Erfassung der Farben rot, gelb, blau (RGB) ausgelegt sein kann, sondern es sind pro Bildpunkt mehrere Pixelsensoren vorhanden, sodass diese eben Subpixelsensoren darstellen. Jeder Subpixelsensor kann ein eigenes Polarisationsfilter aufweisen, wobei die Polarisationsrichtungen der mehreren Subpixelsensoren jedes Bildpunkts unterschiedlich ausgerichtet sind. Durch Auswählen eines der Subpixelsensoren oder einiger der Subpixelsensoren und durch Weiterleiten ausschließlich von deren Bildpunktdaten kann somit ein Kamerabild erzeugt werden, bei welchem die Lichterfassung mit Polarisationswirkung erfolgt ist. Es ergibt sich hierbei der Vorteil, dass unterschiedliche Bildregionen eines Kamerabilds mit unterschiedlicher Polarisationsrichtung erfasst werden können. Es können pro Bildpunkt 2 oder mehr als zwei Subpixelsensoren der beschriebenen Art vorgesehen sein.

Mehrere Ausführungsformen betreffen die Frage, wie die jeweilige Oberflächenormale der zumindest einen Oberfläche durch die Schätzeinrichtung geschätzt werden kann.

In einer Ausführungsform weist die Schätzeinrichtung zum Schätzen der Ausrichtung der jeweiligen Oberflächenormale eine Sensoranordnung zum Erfassen von 3D-Bildinformationen (3D - dreidimensional) auf. Die Schätzeinrichtung ist dazu eingerichtet, die Ausrichtung der jeweiligen Oberflächennormale der zumindest einen Oberfläche auf der Grundlage der 3D-Bildinformationen durch Ermitteln einer räumlichen Ausrichtung der jeweiligen Oberfläche zu ermitteln. Es kann also ermittelt werden, wie eine Oberfläche im Raum angeordnet oder ausgerichtet ist. Daraufhin kann auch auf die räumliche Ausrichtung ihrer Oberflächenormale in bekannter Weise geschlossen werden. Es erfolgt also eine Vermessung der jeweiligen Oberfläche und daraufhin kann für eine Oberflächenormale deren Ausrichtung ermittelt werden. Falls die Oberfläche gekrümmt ist, kann die Oberfläche in mehrere Teilflächen gedanklich oder virtuell eingeteilt werden und für jede Teilfläche eine eigene Oberflächenormale ermittelt werden. Es kann aber auch vorgesehen sein, für die gesamte Oberfläche eine mittlere Oberflächenormale zu berechnen. Als Sensoranordnung kann beispielsweise ein Laserscanner und/oder ein Lidar und/oder ein Radar und/oder eine TOF-Kamera (TOF - Time of Flight) und/oder eine 3D-Kamera verwendet werden. Die Schätzeinrichtung kann des Weiteren ein Programmmodul umfassen, das beispielsweise durch die besagte Prozessoreinrichtung ausgeführt werden kann und welches die Ausrichtung auf der Grundlage der 3D-Bildinformationen ermitteln kann.

In einer Ausführungsform ist die Schätzeinrichtung zum Schätzen der Ausrichtung der jeweiligen Oberflächenormale der zumindest einen Oberfläche dazu eingerichtet, ein digitales Oberflächenmodell zu betreiben, welches in Abhängigkeit von dem zumindest einen Kamerabild eine jeweilige Form und/oder Pose (räumliche Position und Ausrichtung) des zumindest einen Umgebungsobjekts schätzt und daraus für die zumindest eine Oberfläche des jeweiligen Umgebungsobjekts die Ausrichtung der jeweiligen Oberflächennormale ermittelt. Die Schätzeinrichtung kann hierzu auf der Grundlage eines Programmmoduls oder Softwaremoduls gebildet sein, das beispielsweise durch die besagte Prozessoreinrichtung betrieben werden kann. Das Oberflächenmodell kann beispielsweise vorsehen, dass auf Grundlage des zumindest einen Kamerabilds ein Standardmodell für eine Umgebungsobjekt angepasst wird, also beispielsweise zumindest ein Parameter des Standardmodells betreffend die Größe und/oder Pose und/oder Form des Umgebungsobjekts, derart oder so lange angepasst wird, beispielsweise durch iteratives Anpassen, bis das Standardmodell einer in dem zumindest einen Kamerabild vorhandenen Abbildung des Umgebungsobjekts entspricht oder diese Abbildung korrekt prädiziert, was durch einen Vergleich der Abbildung des Umgebungsobjekts mit dem Oberflächenmodell erreicht oder geprüft oder entschieden werden kann. Passt dann das Oberflächenmodell zu den in dem zumindest einen Kamerabild erkennbaren Abbildung, so ist verifiziert oder sichergestellt, dass das Oberflächenmodell die zumindest eine Oberfläche des Umgebungsobjekts korrekt nachbildet oder beschreibt. Daraufhin kann auf der Grundlage des Oberflächenmodells die Ausrichtung der jeweiligen Oberflächenormalen der zumindest einen Oberfläche ermittelt werden.

Es kann vorgesehen sein, zu einem Umgebungsobjekt oder zu mehr als einem Umgebungsobjekt jeweils nur eine einzige Oberfläche oder mehr als eine Oberfläche zu ermitteln oder zu überprüfen.

Wie bereits beschrieben, kann die Polarisationsfiltereinrichtung eine einzige Polarisationsrichtung für die Erfassung des gesamten Kamerabilds vorsehen oder alternativ dazu für mehrere getrennte Regionen eines Kamerabilds, z.B. für die einzelnen Bildpunkte, eine jeweilige Polarisationsrichtung bereitstellen, die von der jeweiligen Polarisationsrichtung eine anderen Region unabhängig eingestellt werden kann. Es kann nun aber vorkommen, dass für eine Anzahl von Oberflächen, die in dem zumindest einen Kamerabild erkennbar oder abgebildet sind, eine jeweilige Sollpolarisationsrichtung ermittelt wird und hierbei diese Anzahl größer ist als die Anzahl der möglichen unterschiedlichen Polarisationsrichtungen, die in der Polarisationsfiltereinrichtung zugleich tatsächlich eingestellt oder vorgegeben werden können. Mit anderen Worten ist dann also eine Reduktion oder Auswahl notwendig, um mittels des Steuersignals die mögliche Anzahl an einstellbaren Polarisationsrichtungen, also beispielsweise nur eine einzige Polarisationsrichtung oder eine vorbestimmte Anzahl größer als 1, vorzugeben oder einzustellen, obwohl mehr unterschiedliche Polarisationsrichtungen nötig wären.

Hierzu sieht eine Ausführungsform vor, dass die Schätzeinrichtung und/oder die Prozessoreinrichtung jeweils dazu eingerichtet ist, einen jeweiligen Reflexionsgrad der zumindest einen Oberfläche zu ermitteln. Es wird also ermittelt, wie viel Licht oder zu welchem Prozentsatz die jeweilige Oberfläche Licht reflektieren kann. Es wird also beispielsweise ermittelt, wie stark die jeweilige Oberfläche spiegelt und/oder wie glatt sie ist. Dies wird durch einen Wert ausgedrückt, der hier als Reflexionsgrad beschrieben ist. Die Schätzeinrichtung ist dazu eingerichtet, mittels des Steuersignals die Abbildung von Reflexionen nur für solche der Oberflächen zu reduzieren, deren Reflexionsgrad größer als ein vorbestimmter Schwellenwert ist. Es werden also nur diejenigen Oberflächen berücksichtigt, deren Reflexionsgrad oberhalb eines Schwellenwerts liegt, also die am stärksten reflektierenden Oberflächen. Zusätzlich oder alternativ dazu kann vorgesehen sein, dass die Anzahl der ausgewählten Oberflächen kleiner als eine vorbestimmte Höchstanzahl ist. Diese Höchstanzahl kann durch die Polarisationsfiltereinrichtung in der beschriebenen Weise vorgegeben sein, indem diese nur eine begrenzte Anzahl an zugleich einstellbaren Polarisationsrichtungen aufweist. Die Höchstanzahl kann 1 betragen oder größer als 1 sein. Bei dem beschriebenen Sensorchip mit Subpixelsensoren kann die Höchstanzahl der Anzahl der Bildpunkte entsprechen. Durch Verwenden des Schwellenwerts für den Reflexionsgrad ergibt sich der Vorteil, dass nur solche Oberflächen berücksichtigt werden, für die eine vorbestimmte Mindestwahrscheinlichkeit besteht, sodass darin durch die Prozessoreinrichtung ein falsches Umgebungsobjekt aufgrund einer Reflexion erkannt wird. Der Reflexionsgrad kann z.B. anhand eines Objekttyps eines Umgebungsobjekts erkannt werden. Den Objekttyp kann die Prozessoreinrichtung mittels der beschriebenen Objekterkennung erkennen.

Falls die Polarisationsfiltereinrichtung nur eine Polarisationsrichtung aufweist, kann vorgesehen sein, dass mit dem Steuersignal nur eine einzige Sollpolarisationsrichtung vorgegeben wird. Es kann sich hierbei um eine Polarisationsrichtung handeln, die für ein bestimmtes Umgebungsobjekt und dort für eine bestimmte Oberfläche ermittelt wird. Es kann sich beispielsweise um die größte Oberfläche handeln, die in dem zumindest einen Kamerabild aktuell erkennbar ist. Die Sollpolarisationsrichtung kann aber auch beispielsweise ein Mittelwert aus mehreren ermittelten Richtungen sein, die für unterschiedliche Oberflächen ermittelt wurden.

In einer Ausführungsform ist die Schätzeinrichtung und/oder die Prozessoreinrichtung jeweils dazu eingerichtet, dem zumindest einen Umgebungsobjekt einen jeweiligen Kritikalitätsgrad zuzuordnen. Dieser Kritikalitätsgrad betrifft die Kollisionsgefahr, die zwischen dem Kraftfahrzeug und diesem Umgebungsobjekt herrschen kann. Hierbei kann auf eine Fahrassistenzeinrichtung zurückgegriffen werden, welche eine Verkehrssituation auswerten kann und beispielsweise einen Kollisionskurs eines Umgebungsobjekts signalisiert. Die Schätzeinrichtung ist dazu eingerichtet, mittels des Steuersignals die Abbildung von Reflexionen nur für dasjenige Umgebungsobjekt mit dem höchsten Kritikalitätsgrad zu reduzieren. Mit anderen Worten wird also nur für das kritischste Objekt überprüft, ob darin eine Reflexion zu sehen sein könnte, die zu reduzieren oder zu unterdrücken ist. Hierdurch wird in vorteilhafter Weise verhindert, dass eine vermeintliche Kollisionsgefahr beispielsweise zu einer automatischen Notbremsung des Kraftfahrzeugs führt, weil in einer Reflexion ein vermeintliches weiteres Umgebungsobjekt erkannt wird, das sich auf vermeintlichem Kollisionskurs befindet.

Die Erfindung umfasst auch ein Kraftfahrzeug, welches eine Ausführungsform der erfindungsgemäßen Umfeldsensorvorrichtung umfasst. Dieses Kraftfahrzeug weist den Vorteil auf, dass es in seinem Umfeld oder in seiner Umgebung zumindest ein Umgebungsobjekt detektieren oder erkennen kann und hierbei davor geschützt ist, in einer Reflexion an einer Oberfläche ein vermeintliches weiteres Umgebungsobjekt, das aber tatsächlich nicht vorhanden ist, zu erkennen oder zu detektieren.

Das erfindungsgemäße Kraftfahrzeug ist bevorzugt als Kraftwagen, insbesondere als Personenkraftwagen oder Lastkraftwagen oder Personenbus, ausgestaltet.

Durch den Betrieb der erfindungsgemäßen Umfeldsensorvorrichtung ergibt sich ein Verfahren, das ebenfalls Bestandteil der Erfindung ist. Mit anderen Worten umfasst das Verfahren das Unterdrücken von Abbildungen von Reflexionen (Spiegelbildern und/oder Spitzlichtern) in zumindest einem Kamerabild einer Kamera, die in einer Umfeldsensorvorrichtung eines Kraftfahrzeugs betrieben wird. Die Kamera erzeugt hierbei das zumindest eine besagte Kamerabild, in welchem eine Umgebung oder ein Umfeld des Kraftfahrzeugs abgebildet ist. Dabei dämpft eine Polarisationsfiltereinrichtung ein aus dem Umfeld in der Kamera eintreffendes Licht mit Bezug auf eine vorbestimmte Polarisationsrichtung, sodass dieses Licht nur gedämpft oder reduziert in dem zumindest einen Kamerabild abgebildet ist. Eine Prozessoreinrichtung erkennt in dem zumindest einen Kamerabild zumindest ein Umgebungsobjekt. Erfindungsgemäß schätzt nun eine Schätzeinrichtung eine jeweilige Ausrichtung einer jeweiligen Oberflächenormale zumindest einer Oberfläche in dem zumindest einen Umgebungsobjekt. Dies kann für ein Umgebungsobjekt oder für mehr als ein Umgebungsobjekt durchgeführt werden. Es kann hierbei für eine Oberfläche oder für mehr als eine Oberfläche pro Umgebungsobjekt durchgeführt. Eine Stelleinrichtung ermittelt in Abhängigkeit von der jeweiligen geschätzten Ausrichtung der zumindest einen Oberfläche eine jeweilige Sollpolarisationsrichtung des Polarisationsfilters, durch welche in dem zumindest einen Kamerabild eine jeweilige Abbildung von Reflexionen an der jeweiligen Oberfläche reduziert wird. Die Stelleinrichtung erzeugt ein Steuersignal gemäß der jeweils ermittelten Sollpolarisationseinrichtung. Hierbei kann auch die beschriebene Auswahl für ein Umgebungsobjekt oder einige Umgebungsobjekte und hierbei für eine Oberfläche oder einige Oberflächen erfolgen, falls die Polarisationsfiltereinrichtung nicht derart viele unterschiedliche Polarisationsrichtungen zugleich für unterschiedliche Regionen einstellen kann, wie es den erkannten Oberflächen entspricht. Der Polarisationsfilter stellt dann seine Polarisationsrichtung in Abhängigkeit von dem Steuersignal ein.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: eine schematische Darstellung einer Ausführungsform des erfindungsgemäßen Kraftfahrzeugs mit einer Umfeldsensorvorrichtung;
- Fig. 2: eine schematische Darstellung einer Polarisationsfiltereinrichtung gemäß einer ersten Ausführungsform; und
- Fig. 3: eine schematische Darstellung einer Polarisationsfiltereinrichtung gemäß einer zweiten Ausführungsform.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

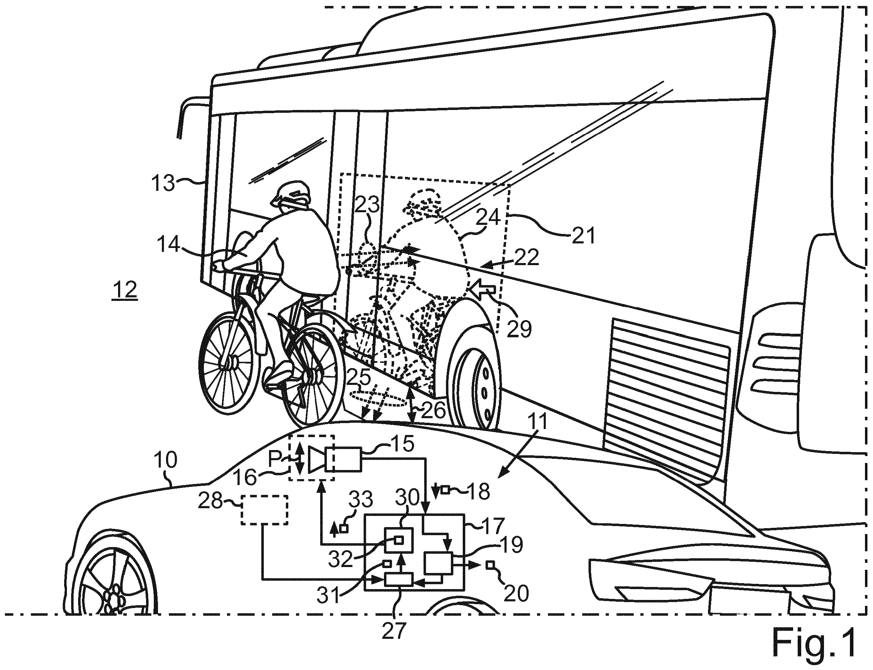

Fig. 1 zeigt ein Kraftfahrzeug 10, bei dem es sich um einen Kraftwagen, insbesondere einen Personenkraftwagen oder Lastkraftwagen, handeln kann. Das Kraftfahrzeug 10 kann eine Umfeldsensorvorrichtung 11 aufweisen, mittels welcher in dem Kraftfahrzeug 10 automatisiert eine Umgebung oder ein Umfeld 12 des Kraftfahrzeugs 10 erfasst werden kann. Insbesondere kann zumindest ein Umgebungsobjekt 13, 14 in dem Umfeld 12 mittels der Umfeldsensorvorrichtung 11 erfasst und erkannt werden. In Fig. 1 ist beispielhaft dargestellt, dass es sich bei dem Umgebungsobjekt 13 um einen Personenbus und bei dem Umgebungsobjekt 14 um einen Radfahrer handeln kann.

Die Umfeldsensorvorrichtung 11 kann eine Kamera 15, eine Polarisationsfiltereinrichtung 16 und eine Prozessoreinrichtung 17 aufweisen. Die Kamera 15 kann beispielsweise eine Farbbildkamera oder eine Infrarotkamera oder eine Graustufenkamera oder eine Kombination aus den besagten Kameratypen sein. Die Kamera 15 kann eine Einzelbildkamera oder eine Videokamera sein. Zumindest ein Kamerabild 18 der Kamera 15 kann durch die Prozessoreinrichtung 17 empfangen werden. Die Prozesseinrichtung 17 kann ein Softwaremodul oder Programmmodul 19 aufweisen, mittels welchem in dem zumindest einen Kamerabild 18 die jeweilige Abbildung des zumindest einen Umgebungsobjekts 13, 14 erkannt oder segmentiert werden kann und daraufhin das zumindest eine Umgebungsobjekt 13, 14 als solches erkannt werden kann, also z.B. ein Objekttyp und/oder seine Form. Das Programmmodul 19 führt also eine Objekterkennung durch. Es kann durch das Programmmodul 19 beispielsweise ein Umgebungsmodell oder Umfeldmodell 20 erzeugt werden, welches beispielsweise eine Umgebungskarte sein kann, durch welche die jeweilige relative Lage des zumindest einen Umgebungsobjekts 13, 14 bezüglich des Kraftfahrzeugs 10 kartographiert oder beschrieben sein kann. Beispielsweise kann die Umfeldsensorvorrichtung so einer autonomen Fahrfunktion signalisieren, wo sich das zumindest eine Umgebungsobjekt 13, 14 befindet. Die Prozessoreinrichtung 17 kann auf der Grundlage zumindest eines Mikroprozessors und/oder zumindest eines Mikrocontrollers gebildet sein.

Beim Erkennen des zumindest einen Umgebungsobjekts 13, 14 auf der Grundlage des zumindest einen Kamerabilds 18 kann es vorkommen, dass nicht nur ein tatsächliches Umgebungsobjekt 13, 14 erkannt wird, sondern beispielsweise auch aufgrund einer reflektierenden Oberfläche 21 eine Reflexion 22 eines anderen Umgebungsobjekts 14 in dem zumindest einen Kamerabild 18 abgebildet sein könnte. In Fig. 1 ist dargestellt, wie die Reflexion 22 zustandekommen kann, indem Licht 23, das von einem Umgebungsobjekt 14 ausgeht, an einer reflektierenden Oberfläche 21 eines anderes Umgebungsobjekts 13 reflektiert wird und das an der Oberfläche 21 reflektierte Licht 25 auf die Kamera 15 trifft und somit von dieser erfasst wird. Allerdings kann das reflektierte Licht 23 aufgrund der Reflexion 22 an der Oberfläche 21 eine dominierende oder ausgerichtete Polarität aufweisen. Durch die Reflexion 22 kann in der Oberfläche 21 ein Spiegelbild 24 des gespiegelten oder reflektierten Umgebungsobjekts 14 erkennbar werden.

Eine Polarisation 26 des reflektierten Lichts 25 kann es aber möglich machen, in dem zumindest einen Kamerabild 18 die Reflexion 22, das heißt das Spiegelbild 24, zu unterdrücken. Die Umfeldsensorvorrichtung 11 kann hierzu vorsehen, dass eine Polarisationsrichtung P der Polarisationsfiltereinrichtung 16 einstellbar ist. Hierzu kann eine Schätzeinrichtung 27 ermitteln, wo sich eine jeweilige Oberfläche 21 an dem zumindest einen Umgebungsobjekt 13, 14 befinden kann. Hierzu kann vorgesehen sein, dass die Polarisationsfiltereinrichtung 16 in Bezug auf die Ausrichtung ihrer Polarisationsrichtung P adaptiv ausgestaltet ist.

Eine Schätzeinrichtung 27 kann zu dem zumindest einen erkannten Umgebungsobjekt 13, 14, wie es durch die Objekterkennung des Programmmoduls 19 erkannt werden kann, jeweils ermitteln, ob und wo sich dort eine möglicherweise reflektierende Oberfläche 21 befindet. Zusätzlich oder alternativ zur Nutzung der Objekterkennung des Programmmoduls 19 kann vorgesehen sein, dass die Schätzeinrichtung eine Sensoranordnung 28 aufweist, mittels welcher aktiv die räumliche Anordnung der zumindest einen reflektierenden Oberfläche 21 vermessen werden kann. Die Sensoranordnung 28 kann hierzu beispielsweise einen Lidar und/oder eine 3D-Kamera aufweisen. Auf Grundlage der vermessenen Oberfläche 21 kann ein Normalenvektor 29 der Oberfläche 21 geschätzt oder ermittelt werden. Der Normalenvektor gibt die Richtung senkrecht zur jeweiligen Oberfläche 21 an. Dieser Normalenvektor 29 beschreibt die Oberflächenormale der jeweiligen Oberfläche 21. Die Oberflächenormale kann aber auch beispielsweise einfach als Definition einer Ebene geschätzt oder beschrieben sein, welche parallel zur Oberfläche 21 verläuft. Die Schätzeinrichtung 27 kann beispielsweise als ein weiteres Programmmodul der Prozessoreinrichtung 17 ausgestaltet sein.

Eine Stelleinrichtung kann in Abhängigkeit von einer geschätzten Ausrichtung 31 des jeweiligen Normalenvektors 29 der zumindest einen Oberfläche 21 eine Sollpolarisationsrichtung 32 ermitteln, die angibt, welche Ausrichtung die Polarisationsrichtung P der Polarisationsfiltereinrichtung 16 aufweisen muss, damit das reflektierte Licht 25 durch die Polarisationsfiltereinrichtung 16 unterdrückt oder reduziert wird, sodass es nicht in dem zumindest einen Kamerabild 18 abgebildet ist. Die Stelleinrichtung kann ein Steuersignal 33 erzeugen, welches die einstellbare Polarisationsrichtung P der Polarisationsfiltereinrichtung 16 gemäß der Sollpolarisationsrichtung 32 einstellt.

Somit kann verhindert werden, dass das Spiegelbild 24 in dem zumindest einen Kamerabild 18 abgebildet oder enthalten ist. Damit kann das Programmmodul 19 auch nicht versehentlich das Spiegelbild 24 als weiteres, vermeintliches Umgebungsobjekt erkennen.

Somit ist also ein Fehlalarm in Bezug auf ein vermeintliches weiteres Umgebungsobjekt vermieden.

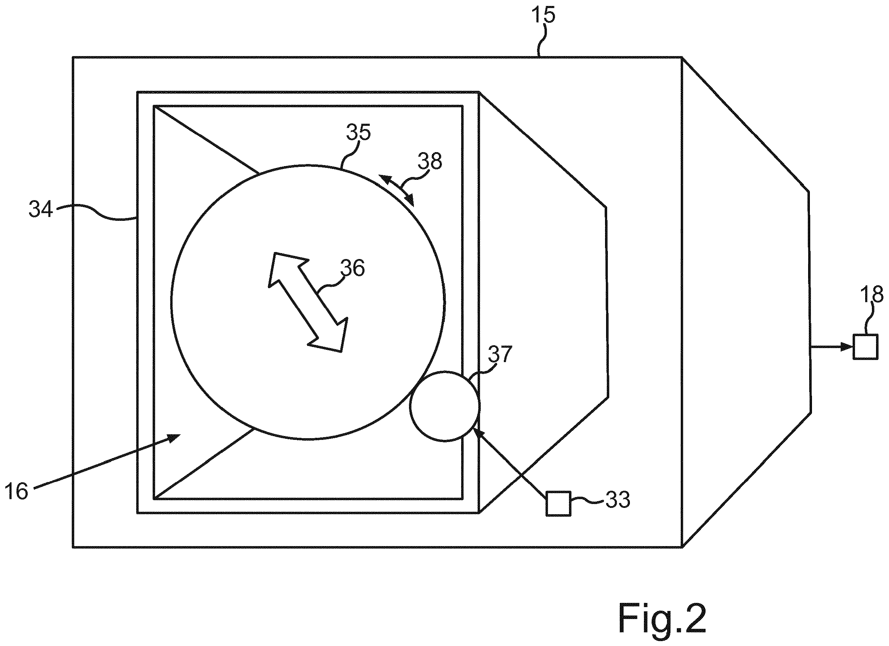

Fig. 2 veranschaulicht, wie die Polarisationsfiltereinrichtung 16 an der Kamera 15 bereitgestellt werden kann. In einem optischen Pfad 34 der Kamera 15 kann beispielsweise eine drehbar gelagerte Polarisationsfilterscheibe 35 angeordnet sein. Der optische Pfad 34 kann beispielsweise vor oder hinter einer Linse der Kamera 15 vorhanden sein. Eine Polarisationsrichtung 36 der Polarisationsfilterscheibe 35 ist in Fig. 2 visualisiert. Zum Einstellen oder Ausrichten der Polarisationsrichtung 36 kann eine Aktuatoreinheit 37 vorgesehen sein, welche in Abhängigkeit von dem Steuersignal 33 eine Drehlage 38 der Polarisationsfilterscheibe 35 einstellen kann. Die ausgerichtete Polarisationsrichtung 36 entspricht der Polarisationsrichtung P.

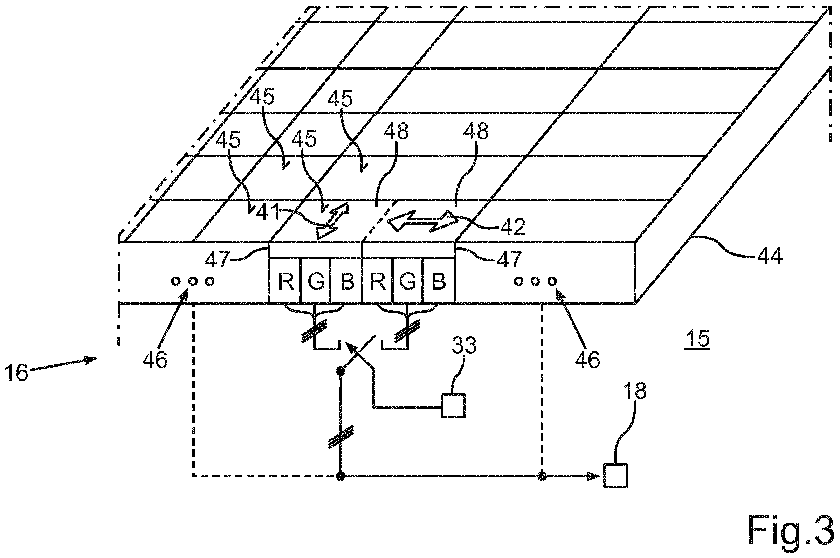

Fig. 3 veranschaulicht, wie als Polarisationsfiltereinrichtung 16 in einem Sensorchip 44 der Kamera 15 für einzelne Bildpunkte 45 jeweils ein individuelles Polarisationsfilter vorgesehen sein kann. Der Übersichtlichkeit halber sind in Fig. 4 nur einige der Bildpunkte mit dem Bezugszeichen versehen. In Fig. 4 ist lediglich für einen einzelnen Bildpunkt 45 der Aufbau dargestellt. Die übrigen Bildpunkte 45 können denselben Aufbau aufweisen, was in Fig. 4 durch Auslassungspunkte 46 symbolisiert ist.

Ein Bildpunkt 45 kann mehrere Subpixel 47 aufweisen, mittels denen jeweils ein Bildpunkt erfasst werden kann, beispielsweise eine RGB-Erfassung (RGB - rot, gelb blau) durchgeführt werden kann. Als Polarisationsfiltereinrichtung kann für jedes Subpixel 47 jeweils ein eigenes Polarisationsfilter 48 vorgesehen sein, wobei aber pro Subpixel 47 eine andere Polarisationsrichtung 41, 42 vorgesehen sein kann. Beim Erfassen des zumindest einen Kamerabildes 18 kann für jeden Bildpunkt 45 einzeln zwischen den Subpixeln 47 in Abhängigkeit von dem Steuersignal 33 umgeschaltet werden. Somit ist für jeden Bildpunkt 45 individuell die Polarisationsrichtung 41, 42 einstellbar. Die aktuelle genutzte Polarisationsrichtung 41, 42 entspricht der Polarisationsrichtung P. Es können pro Bildpunkt 45 zwei oder mehr als zwei Subpixelsensoren, je einer pro Subpixel 47, vorgesehen sein, beispielsweise vier Subpixelsensoren mit Polarisationsrichtungen, die nacheinander um jeweils 45° zueinander verdreht angeordnet sind.

Insgesamt zeigen die Beispiele, wie durch die Erfindung eine aktive Reflexionsfilterung für eine video-basierte Umfeldsensorvorrichtung bereitgestellt werden kann.

## Patentansprüche

1. Umfeldsensorvorrichtung (11) für ein Kraftfahrzeug (10), wobei die Umfeldsensorvorrichtung (11) aufweist:
- eine Kamera (15) zum Erzeugen von zumindest einem Kamerabild (18), in welchem ein Umfeld (12) des Kraftfahrzeugs (10) abgebildet ist,
- eine Polarisationsfiltereinrichtung (16), welche dazu eingerichtet ist, bei Erfassen des zumindest einen Kamerabilds (18) ein aus dem Umfeld (12) in der Kamera (15) eintreffendes Licht (25) in Bezug auf eine vorbestimmte Polarisationsrichtung (P) zu dämpfen,
- eine Prozessoreinrichtung (17), welche dazu eingerichtet ist, in dem zumindest einen Kamerabild (18) zumindest ein Umgebungsobjekt (13, 14) zu erkennen,
**dadurch gekennzeichnet, dass**
- die Polarisationsfiltereinrichtung (16) dazu eingerichtet ist, seine Polarisationsrichtung (P) in Abhängigkeit von einem Steuersignal (33) einzustellen, und
- eine Schätzeinrichtung (27) dazu eingerichtet ist, eine jeweilige Ausrichtung (31) einer jeweiligen Oberflächennormale (29) zumindest einer Oberfläche (21) des zumindest einen Umgebungsobjekts (13, 14) zu schätzen, und
- eine Stelleinrichtung (30) dazu eingerichtet ist, in Abhängigkeit von der jeweiligen geschätzten Ausrichtung (31) der zumindest einen Oberflächenormale (29) jeweils eine Sollpolarisationsrichtung (32) für die Polarisationsfiltereinrichtung (16) zu ermitteln, durch welche in dem zumindest einen Kamerabild (18) eine jeweilige Abbildung von Reflexionen (22) an der zumindest einen Oberfläche (21) reduziert ist, und das Steuersignal (33) gemäß der jeweils ermittelten Sollpolarisationsrichtung (32) zu erzeugen.

2. Umfeldsensorvorrichtung (11) nach Anspruch 1, wobei die Polarisationsfiltereinrichtung (16) eine drehbar gelagerte Polarisationsfilterscheibe (35), welche die Polarisationsrichtung (P) aufweist, und eine Aktuatoreinheit (37) zum Drehen der Polarisationsfilterscheibe (35) umfasst und die Aktuatoreinheit (37) dazu eingerichtet ist, eine Drehlage der Polarisationsfilterscheibe (35) in Abhängigkeit von dem Steuersignal (33) einzustellen.

3. Umfeldsensorvorrichtung (11) nach einem der vorhergehenden Ansprüche, wobei die Polarisationsfiltereinrichtung (16) umfasst, dass ein Sensorchip (44) der Kamera (15) zum Erfassen von Bildpunkten (45) des zumindest einen Kamerabilds (18) pro Bildpunkt (45) jeweils mehrere Subpixelsensoren (48) aufweist, die unterschiedliche Polarisationsrichtungen (41, 42) aufweisen.

4. Umfeldsensorvorrichtung (11) nach einem der vorhergehenden Ansprüche, wobei die Schätzeinrichtung (27) zum Schätzen der Ausrichtung (31) der jeweiligen Oberflächennormalen (26) der zumindest einen Oberfläche (21) eine Sensoranordnung (28) zum Erfassen von 3D-Bildinformationen aufweist und die Schätzeinrichtung (27) dazu eingerichtet ist, die Ausrichtung auf der Grundlage der 3D-Bildinformationen durch Ermitteln einer räumlichen Ausrichtung (31) der jeweiligen Oberfläche (21) zu ermitteln.

5. Umfeldsensorvorrichtung (11) nach einem der vorhergehenden Ansprüche, wobei die Schätzeinrichtung (27) zum Schätzen der Ausrichtung (31) der jeweiligen Oberflächennormale (29) der zumindest einen Oberfläche (21) dazu eingerichtet ist, ein digitales Oberflächenmodell zu betreiben, welches in Abhängigkeit von dem zumindest einen Kamerabild (18) eine jeweilige Form und/oder Pose des zumindest einen Umgebungsobjekts (13, 14) schätzt und daraus für die zumindest eine Oberfläche (21) die Ausrichtung (31) der jeweiligen Oberflächennormale (29) ermittelt.

6. Umfeldsensorvorrichtung (11) nach einem der vorhergehenden Ansprüche, wobei die Schätzeinrichtung (27) und/oder die Prozessoreinrichtung (17) jeweils dazu eingerichtet ist, einen jeweiligen Reflexionsgrad der zumindest einen Oberfläche (21) zu ermitteln, und die Schätzeinrichtung dazu eingerichtet ist, mittels des Steuersignals (33) die Abbildung von Reflexionen (22) nur für solche der Oberflächen (21) zu reduzieren, deren Reflexionsgrad größer als eine vorbestimmter Schwellenwert ist und/oder deren Anzahl kleiner als eine vorbestimmte Höchstanzahl ist.

7. Umfeldsensorvorrichtung (11) nach einem der vorhergehenden Ansprüche, wobei die Schätzeinrichtung (27) und/oder die Prozessoreinrichtung (17) jeweils dazu eingerichtet ist, dem zumindest einen Umgebungsobjekt einen jeweiligen Kritikalitätsgrad in Bezug auf eine Kollisionsgefahr zuzuordnen, und die Schätzeinrichtung (27) dazu eingerichtet ist, mittels des Steuersignals (33) die Abbildung von Reflexionen (22) nur für das Umgebungsobjekt (13, 14) mit dem höchsten Kritikalitätsgrad zu reduzieren.

8. Kraftfahrzeug (10) mit einer Umfeldsensorvorrichtung (11) nach einem der vorhergehenden Ansprüche.

9. Verfahren zum Unterdrücken von Abbildungen von Reflexionen (22) in zumindest einem Kamerabild (18) einer Kamera (15) einer Umfeldsensorvorrichtung (11) eines Kraftfahrzeugs (10), wobei
- die Kamera (15) das zumindest eine Kamerabild (18), in welchem ein Umfeld (12) des Kraftfahrzeugs (10) abgebildet ist, erzeugt und dabei
- eine Polarisationsfiltereinrichtung (16) ein aus dem Umfeld (12) in der Kamera (15) eintreffendes Licht (25) in Bezug auf eine vorbestimmte Polarisationsrichtung (P) dämpft und
- eine Prozessoreinrichtung (17) in dem zumindest einen Kamerabild (18) zumindest ein Umgebungsobjekt (13, 14) erkennt,
**dadurch gekennzeichnet, dass**
- eine Schätzeinrichtung (27) eine jeweilige Ausrichtung (31) einer jeweiligen Oberflächennormale (29) zumindest einer Oberfläche (21) an dem zumindest einen Umgebungsobjekt (13, 14) schätzt und
- eine Stelleinrichtung (32) in Abhängigkeit von der jeweiligen geschätzten Ausrichtung (31) der zumindest einen Oberflächenormale (29) eine jeweilige Sollpolarisationsrichtung (32) für die Polarisationsfiltereinrichtung (16) ermittelt, durch welche in dem zumindest einen Kamerabild (18) eine jeweilige Abbildung von Reflexionen (22) an der jeweiligen Oberfläche (21) reduziert wird, und ein Steuersignal (33) gemäß der jeweils ermittelten Sollpolarisationsrichtung (32) erzeugt und
- die Polarisationsfiltereinrichtung (16) ihre Polarisationsrichtung (P) in Abhängigkeit von dem Steuersignal (33) einstellt.

## Claims

1. Environment sensor device (11) for a motor vehicle (10), wherein the environment sensor device (11) has:
- a camera (15) for generating at least one camera image (18) in which a surrounding area (12) of the motor vehicle (10) is depicted,
- a polarisation filter apparatus (16) configured to dampen light (25) entering the camera (15) from the surrounding area (12) with respect to a predetermined polarisation direction (P) when the at least one camera image (18) is captured,
- a processor apparatus (17) configured to identify at least one environment object (13, 14) in the at least one camera image (18),
**characterised in that**
- the polarisation filter apparatus (16) is configured to adjust its polarisation direction (P) depending on a control signal (33), and
- an estimating apparatus (27) is configured to estimate a respective orientation (31) of a respective surface normal (29) of at least one surface (21) of the at least one environment object (13, 14), and
- an adjustment apparatus (30) is configured to determine, depending on the respective estimated orientation (31) of the at least one surface normal (29), a respective target polarisation direction (32) for the polarisation filter apparatus (16), by means of which a respective image of reflections (22) on the at least one surface (21) is reduced in the at least one camera image (18), and to generate the control signal (33) in accordance with the respectively determined target polarisation direction (32).

2. Environment sensor device (11) according to claim 1, wherein the polarisation filter apparatus (16) comprises a rotatably mounted polarisation filter disc (35) having the polarisation direction (P), and an actuator unit (37) for rotating the polarisation filter disc (35), and the actuator unit (37) is configured to adjust a rotational position of the polarisation filter disc (35) depending on the control signal (33).

3. Environment sensor device (11) according to any of the preceding claims, wherein the polarisation filter apparatus (16) comprises that a sensor chip (44) of the camera (15) has multiple subpixel sensors (48) per pixel (45), respectively, for capturing pixels (45) of the at least one camera image (18), which subpixel sensors have different polarisation directions (41, 42).

4. Environment sensor device (11) according to any of the preceding claims, wherein the estimating apparatus (27) has a sensor arrangement (28) for capturing 3D image information in order to estimate the orientation (31) of the respective surface normal (26) of the at least one surface (21), and the estimating apparatus (27) is configured to determine the orientation on the basis of the 3D image information by determining a spatial orientation (31) of the respective surface (21).

5. Environment sensor device (11) according to any of the preceding claims, wherein the estimating apparatus (27), in order to estimate the orientation (31) of the respective surface normal (29) of the at least one surface (21), is configured to operate a digital surface model which estimates a respective shape and/or posture of the at least one environment object (13, 14) depending on the at least one camera image (18) and determines therefrom, for the at least one surface (21), the orientation (31) of the respective surface normal (29).

6. Environment sensor device (11) according to any of the preceding claims, wherein the estimating apparatus (27) and/or the processor apparatus (17) is in each case configured to determine a respective reflectance of the at least one surface (21), and the estimating apparatus is configured to reduce, by means of the control signal (33), the image of reflections (22) only for those of the surfaces (21) whose reflectance is greater than a predetermined threshold value and/or whose number is less than a predetermined maximum number.

7. Environment sensor device (11) according to any of the preceding claims, wherein the estimating apparatus (27) and/or the processor apparatus (17) is in each case configured to associate the at least one environment object with a degree of criticality in relation to a collision danger, and the estimating apparatus (27) is configured to reduce, by means of the control signal (33), the image of reflections (22) only for the environment object (13, 14) with the highest degree of criticality.

8. Motor vehicle (10) having an environment sensor device (11) according to any of the preceding claims.

9. Method for suppressing images of reflections (22) in at least one camera image (18) of a camera (15) of an environment sensor device (11) of a motor vehicle (10), wherein
- the camera (15) generates at least one camera image (18) in which a surrounding area (12) of the motor vehicle (10) is depicted and
- a polarisation filter apparatus (16) dampens light (25) entering the camera (15) from the surrounding area (12) with respect to a predetermined polarisation direction (P) and
- a processor apparatus (17) identifies at least one environment object (13, 14) in the at least one camera image (18),
**characterised in that**
- an estimating apparatus (27) estimates a respective orientation (31) of a respective surface normal (29) of at least one surface (21) on the at least one environment object (13, 14), and
- an adjustment apparatus (32) determines, depending on the respective estimated orientation (31) of the at least one surface normal (29), a respective target polarisation direction (32) for the polarisation filter apparatus (16), by means of which a respective image of reflections (22) on the at least one surface (21) is reduced in the at least one camera image (18), and a control signal (33) is generated in accordance with the respectively determined target polarisation direction (32), and
- the polarisation filter apparatus (16) adjusts its polarisation direction (P) depending on the control signal (33).

## Revendications

1. Dispositif de détection d'environnement (11) pour un véhicule à moteur (10), dans lequel le dispositif de détection d'environnement (11) présente :
- une caméra (15) permettant de générer au moins une image de caméra (18) sur laquelle est représenté un environnement (12) du véhicule à moteur (10),
- un dispositif de filtrage polarisant (16) configuré pour, lorsque la au moins une image de caméra (18) est détectée, atténuer par rapport à une direction de polarisation (P) prédéterminée la lumière (25) arrivant dans la caméra (15) depuis l'environnement (12),
- un dispositif de traitement (17) configuré pour identifier au moins un objet d'environnement (13, 14) sur au moins une image de caméra (18),
**caractérisé en ce que**
- le dispositif de filtrage polarisant (16) est conçu pour ajuster sa direction de polarisation (P) en fonction d'un signal de commande (33), et
- un dispositif d'estimation (27) est conçu pour estimer une orientation respective (31) d'une normale (29) respective d'au moins une surface (21) du au moins un objet d'environnement (13, 14), et
- un dispositif de réglage (30) est conçu pour déterminer respectivement, pour le dispositif de filtrage polarisant (16) et en fonction de l'orientation (31) respectivement estimée de la au moins une normale (29), une direction de polarisation théorique (32) grâce à laquelle une représentation respective de réflexions (22) sur la au moins une surface (21) est réduite sur la au moins une image de caméra (18), et pour générer le signal de commande (33) conformément à la direction de polarisation théorique (32) respectivement déterminée.

2. Dispositif de détection d'environnement (11) selon la revendication 1, dans lequel le dispositif de filtrage polarisant (16) comprend un disque de filtrage polarisant (35) monté rotatif et présentant la direction de polarisation (P), et une unité d'actionnement (37) permettant de faire tourner le disque de filtrage polarisant (35), et l'unité d'actionnement (37) est conçue pour ajuster une position de rotation du disque de filtrage polarisant (35) en fonction du signal de commande (33).

3. Dispositif de détection d'environnement (11) selon l'une quelconque des revendications précédentes, dans lequel le dispositif de filtrage polarisant (16) implique qu'une puce de détection (44) de la caméra (15) permettant de détecter des pixels (45) de la au moins une image de caméra (18) présente respectivement plusieurs capteurs de sous-pixels (48), présentant différentes directions de polarisation (41, 42), par pixel (45).

4. Dispositif de détection d'environnement (11) selon l'une quelconque des revendications précédentes, dans lequel le dispositif d'estimation (27) permettant d'estimer l'orientation (31) des normales (26) respectives de la au moins une surface (21) présente un agencement de détecteur (28) permettant de détecter des informations d'image 3D, et le dispositif d'estimation (27) est conçu pour déterminer l'orientation sur la base des informations d'image 3D grâce à la détermination d'une orientation spatiale (31) de la surface (21) respective.

5. Dispositif de détection d'environnement (11) selon l'une quelconque des revendications précédentes, dans lequel le dispositif d'estimation (27) permettant d'estimer l'orientation (31) de la normale (29) respective de la au moins une surface (21) est conçu pour faire fonctionner un modèle de surface numérique qui estime une forme et/ou une position respective du au moins un objet d'environnement (13, 14) en fonction de la au moins une image de caméra (18) et l'utilise pour déterminer l'orientation (31) de la normale (29) respective pour la au moins une surface (21).

6. Dispositif de détection d'environnement (11) selon l'une quelconque des revendications précédentes, dans lequel le dispositif d'estimation (27) et/ou le dispositif de traitement (17) est/sont respectivement conçu(s) pour déterminer un facteur de réflexion respectif de la au moins une surface (21), et le dispositif d'estimation est conçu pour, au moyen du signal de commande (33), réduire la représentation de réflexions (22) uniquement pour les surfaces (21) dont le facteur de réflexion est supérieur à une valeur de seuil prédéterminée et/ou dont le nombre est inférieur à un nombre maximal prédéterminé.

7. Dispositif de détection d'environnement (11) selon l'une quelconque des revendications précédentes, dans lequel le dispositif d'estimation (27) et/ou le dispositif de traitement (17) est/sont respectivement conçu(s) pour attribuer au au moins un objet d'environnement un degré de criticité respectif par rapport à un risque de collision, et le dispositif d'estimation (27) est conçu pour, au moyen du signal de commande (33), réduire la représentation de réflexions (22) uniquement pour l'objet d'environnement (13, 14) présentant le degré de criticité le plus élevé.

8. Véhicule à moteur (10) comprenant un dispositif de détection d'environnement (11) selon l'une quelconque des revendications précédentes.

9. Procédé de suppression de représentations de réflexions (22) sur au moins une image de caméra (18) d'une caméra (15) d'un dispositif de détection d'environnement (11) d'un véhicule à moteur (10), dans lequel
- la caméra (15) génère la au moins une image de caméra (18) sur laquelle est représenté un environnement (12) du véhicule à moteur (10), et
- un dispositif de filtrage polarisant (16) atténue par rapport à une direction de polarisation prédéterminée (P) la lumière (25) arrivant dans la caméra (15) depuis l'environnement (12), et
- un dispositif de traitement (17) identifie au moins un objet d'environnement (13, 14) sur la au moins une image de caméra (18),
**caractérisé en ce que**
- un dispositif d'estimation (27) estime une orientation (31) respective d'une normale (29) respective d'au moins une surface (21) au niveau d'au moins un objet d'environnement (13, 14), et
- un dispositif de réglage (32) détermine, en fonction de l'orientation (31) estimée respective de la au moins une normale (29), une direction de polarisation théorique (32) respective pour le dispositif de filtrage polarisant (16) grâce à laquelle une représentation respective de réflexions (22) sur la surface respective (21) est réduite sur la au moins une image de caméra (18), et génère un signal de commande (33) conformément à la direction de polarisation théorique (32) respective déterminée, et
- le dispositif de filtrage polarisant (16) ajuste sa direction de polarisation (P) en fonction du signal de commande (33).
